# EUROPÄISCHE PATENTSCHRIFT

(11) **EP 3 439 909 B1**
(45) Veröffentlichungstag und Bekanntmachung des Hinweises auf die Patenterteilung: **19.02.2020**
(21) Anmeldenummer: 16808668.4
(22) Anmeldetag: 08.12.2016
(51) Int. Cl.: B60N 2/34, B60N 2/90

(54) **FAHRZEUGSITZ MIT MINDESTENS EINEM PNEUMATISCHEN KISSEN**
VEHICLE SEAT HAVING AT LEAST ONE PNEUMATIC CUSHION
SIÈGE DE VÉHICULE MUNI D'AU MOINS UN COUSSIN PNEUMATIQUE

(30) Priorität: 04.04.2016 CH 4332016
(43) Veröffentlichungstag der Anmeldung: 13.02.2019
(73) Patentinhaber: Lantal Textiles AG, 4900 Langenthal (CH)
(72) Erfinder: GLANZMANN-ZAUGG, Manuela, 3414 Oberburg (CH); HERTIG, Thomas, 4933 Rütschelen (CH); GÜHMANN, Andreas, 8322 Madetswil (CH)
(74) Vertreter: Keller & Partner Patentanwälte AG
(86) Internationale Anmeldenummer: PCT/EP2016/080308
(87) Internationale Veröffentlichungsnummer: WO 2017/174168

(56) Entgegenhaltungen:
- EP-A1- 2 944 509
- EP-A1- 2 944 510
- US-A1- 2015 130 244

## Beschreibung

### Technisches Gebiet

Die Erfindung betrifft einen Fahrzeugsitz mit mindestens einem pneumatischen Kissen, welches beim Übergang eines Lehnenelements in eine Liegeposition durch eine Pneumatikeinheit aufgeblasen und beim Übergang des Lehnenelements in eine Sitzposition entleert wird.

### Stand der Technik

Der Einsatz von pneumatischen Kissen in Fahrzeugsitzen, insbesondere im Bereich der Flugzeugsitze ist bekannt. Ein wesentlicher Vorteil von pneumatischen Kissen liegt im reduzierten Gewicht sowie der Möglichkeit, die Härte der pneumatischen Kissen in Abhängigkeit von äusseren Faktoren oder des persönlichen Geschmacks eines auf dem Fahrzeugsitz sitzenden Passagiert einstellen zu können.

Beispielsweise beschreibt die DE 10 2010 020 642 (Dornier Technologie GmbH & Co KG) einen Flugzeugsitz mit einem Neigungssensor für die Rückenlehne, wobei bei mindestens einem aufblasbaren Luftkissen der Druck in Abhängigkeit des gemessenen Neigungswinkels der Rückenlehne geregelt wird. Der Neigungssensor ist vorzugsweise als absoluter Neigungssensor ausgestaltet, welcher in eine Pneumatikeinheit des Sitzes integriert ist. Dadurch kann der Druck des mindestens einen aufblasbaren Luftkissens in Abhängigkeit des absoluten Lehnenwinkels in Bezug zur Horizontalen geregelt werden und nicht wie bei bekannten System anhand des relativen Winkels zwischen Rückenlehne und Sitzfläche.

Die WO 2015/073363 offenbart Premiumsitze für Flugzeuge, welche von einer Sitzposition in eine Liegeposition überführt werden können. Die Sitze verfügen über eine Mehrzahl an aufblasbaren Kammern, welche einen schlafenden Passagier bei Bewegungen des Flugzeugs abfedern. Die Kammern werden selektiv beim Überführen der Sitze zwischen den Positionen aufgeblasen und entleert. Ein gattungsgemässer Fahrzeugsitz ist in der EP2944509 offenbart.

### Darstellung der Erfindung

Aufgabe der Erfindung ist es, einen dem eingangs genannten technischen Gebiet zugehörenden Fahrzeugsitz zu schaffen, welcher in einer Liegeposition einen höheren Liegekomfort bietet.

Die Lösung der Aufgabe ist durch die Merkmale des Anspruchs 1 definiert. Gemäss der Erfindung umfasst der Fahrzeugsitz eine Sitzfläche sowie wenigstens ein zur Sitzfläche um eine Achse schwenkbares Lehnenelement. Das wenigstens eine Lehnenelement ist von einer Sitzposition, in welcher das Lehnenelement im Wesentlichen in einem stumpfen oder überstumpfen Winkel relativ zur Sitzfläche steht, in eine Liegeposition, in welcher die Sitzfläche sowie das Lehnenelement eine im Wesentlichen plane Fläche bilden, und zurück bewegbar. Weiter verfügt der Flugzeugsitz über mindestens ein pneumatisches Kissen sowie über eine Pneumatikeinheit, welche derart ausgestaltet ist, dass diese das mindestens eine pneumatische Kissen im Wesentlichen vollständig aufbläst, wenn das wenigstens eine Lehnenelement in die Liegeposition bewegt wird, und das pneumatische Kissen im Wesentlichen vollständig entleert, wenn das wenigstens eine Lehnenelement in die Sitzposition bewegt wird. Das mindestens eine pneumatische Kissen ist in einem Randbereich der Sitzfläche oder des wenigstens einen Lehnenelements angeordnet, welcher an das wenigstens eine Lehnenelement beziehungsweise die Sitzfläche grenzt, so dass sich das mindestens eine pneumatische Kissen in der Liegeposition zwischen der Sitzfläche und dem wenigstens einen Lehnenelement erstreckt.

Dadurch lässt sich ein allfälliger Spalt zwischen der Sitzfläche und dem wenigstens einen Lehnenelement, welcher durch die Bewegung des Lehnenelements in die Liegeposition entsteht, überbrücken. Dadurch bildet der Fahrzeugsitz in der Liegeposition für einen Passagier eine durchgehende Liegefläche, welche sich durchgehend im Wesentlichen gleich hart anfühlt.

Vorzugsweise handelt es sich beim wenigstens einen Lehnenelement um eine Rückenlehne oder um eine Beinstütze. In einer bevorzugten Ausführungsform weist der Fahrzeugsitz zwei Lehnenelemente auf, welche eine Rückenlehne und eine Beinstütze des Fahrzeugsitzes ausbilden.

Nebst der Sitzfläche sowie der Rückenlehne und/oder der Beinstütze umfasst der Fahrzeugsitz vorzugsweise weitere Elemente, wie zum Beispiel eine Kopfstütze, Armlehnen, einen Ottoman, etc. Die Sitzfläche sowie das wenigstens eine Lehnenelement weisen eine Polsterung auf. Diese Polsterung umfasst vorzugsweise je mindestens ein pneumatisches Kissen. Alternativ kann die Polsterung der Sitzfläche und/oder des wenigstens einen Lehnenelements auch einen Schaumstoff umfassen. Weiter alternativ kann die Polsterung der Sitzfläche und/oder des wenigstens einen Lehnenelements auch über mindestens ein pneumatisches Kissen sowie über Schaumstoff verfügen. Der Fahrzeugsitz verfügt ferner über einen Unterbau, mit welchem der Fahrzeugsitz mit einem Boden des Fahrzeugs verbunden werden kann.

Um das wenigstens eine Lehnenelement relativ zur Sitzfläche zu verschwenken, verfügt der Fahrzeugsitz über eine entsprechende Achse sowie einen Verstellmechanismus, mit welchem sich das wenigstens eine Lehnenelement bewegen lässt. Der Verstellmechanismus erlaubt vorzugsweise in einer ersten Konfiguration eine Arretierung des wenigstens einen Lehnenelements relativ zur Sitzfläche, während der Verstellmechanismus in einer zweiten Konfiguration ein Verschwenken des wenigstens einen Lehnenelements relativ zur Sitzfläche erlaubt.

Ist das Lehnenelement eine Rückenlehne, so steht diese in einer Sitzposition vorzugsweise in einem stumpfen Winkel relativ zur Sitzfläche. Das heisst, dass der Winkel zwischen Sitzfläche und Rückenlehne von 90° bis 180° beträgt. In speziellen Ausführungsformen kann jedoch auch vorgesehen sein, dass die Rückenlehne zusätzlich in einem spitzen Winkel, also einem Winkel zwischen 0° und 90° zur Sitzfläche stehen kann.

Ist das Lehnenelement eine Beinstütze, so steht diese in einer Sitzposition vorzugsweise in einem überstumpfen Winkel relativ zur Sitzfläche. Das heisst, dass zwischen Sitzfläche und Beinstütze ein Winkel grösser als 180° gebildet wird. In einer Sitzposition ist die Beinstütze vorzugsweise in einem Winkel von 270° zur Sitzfläche angeordnet.

Vorzugsweise ist der Fahrzeugsitz derart ausgestaltet, dass sich der Winkel zwischen der Sitzfläche und dem mindestens einen Lehnenelement in der Sitzposition variieren lässt. Beispielsweise kann der Verstellmechanismus derart ausgestaltet sein, dass dieser eine Arretierung des wenigstens einen Lehnenelements in einem beliebigen stumpfen beziehungsweise überstumpfen Winkel relativ zur Sitzfläche ermöglicht. Alternativ kann der Verstellmechanismus auch die Arretierung des wenigstens einen Lehnenelements nur in einer vorgegebenen Anzahl an vorbestimmten Winkeln erlauben.

In der Liegeposition beträgt der Winkel zwischen der Sitzfläche und dem wenigstens einen Lehnenelement im Wesentlichen 180°. Dadurch bilden die Sitzfläche sowie das mindestens eine Lehnenelement für den auf dem Fahrzeugsitz sitzenden, respektive in dieser Position liegenden Passagier eine im Wesentlichen plane Liegefläche.

In der vorliegenden Anmeldung wird unter "im Wesentlichen plan" eine flache Ebene verstanden, wobei diese Ebene je nach Konturierung der Sitzfläche respektive des wenigstens einen Lehnenelements auch gewisse Bereiche aufweisen kann, welche eine leichte Krümmung aufweisen, beispielsweise zur Mitte der Sitzfläche respektive des Lehnenelements hin. Ferner kann aufgrund eines Spiels an der Schwenkachse des mindestens einen Lehnenelements beim Übergang zwischen der Sitzfläche und des Lehnenelements ein kleiner Höhenversatz vorhanden sein.

Als "pneumatisches Kissen" wird in der vorliegenden Anmeldung ein von mindestens zwei in ihren Randbereichen luftdicht miteinander verbundenen flexiblen Seitenflächen gebildetes Kissen verstanden, in dessen Volumen Luft gepumpt werden kann, um ein dreidimensionales weiches Gebilde mit Polsterungseigenschaften zu erhalten. Die Seitenflächen liegen vorzugsweise als einzelne Flächenelemente vor. Alternativ können die mindestens zwei Seitenflächen aus einem einzelnen Flächenelement bestehen, welches über entsprechende Faltungen verfügt.

Ferner wird unter dem Begriff "pneumatisches Kissen" in der vorliegenden Anmeldung auch ein zylindrisches Volumen verstanden, welches durch ein einzelnes, gebogenes und an drei Kanten mit sich selbst luftdicht verbundenes Flächenelement umhüllt ist.

Insbesondere bevorzugt ist das mindestens eine pneumatische Kissen im Wesentlichen quaderförmig und weist daher sechs Seitenflächen auf, welche insbesondere durch sechs separate Flächenelemente gebildet werden. In alternativen Varianten kann das mindestens eine pneumatische Kissen jedoch auch rund, oval oder beliebig polygonal ausgebildet sein.

Die mindestens zwei Seitenflächen umfassen vorzugsweise mindestens ein Polymermaterial. Alternativ können die mindestens zwei Seitenflächen auch ein Textil umfassen, wobei in diesem Fall das Textil mit einer luftdichten Schicht versehen ist. Die mindestens zwei Seitenflächen verfügen vorzugsweise über Sollfaltstellen, so dass sich diese bei der Entleerung in einer vorbestimmten Weise zusammenfalten. Alternativ können die mindestens zwei Seitenflächen auch aus einem elastischen Material bestehen.

Die Pneumatikeinheit verfügt vorzugsweise über eine Pumpe, mit welcher sich Luft in das mindestens eine pneumatische Kissen fördern lässt. Ferner verfügt die Pneumatikeinheit auch über mindestens ein Ventil, mit welchem sich die Pumpe selektiv über mindestens eine Fluidleitung mit dem mindestens einen pneumatischen Kissen fluidisch in Verbindung bringen lässt. Vorzugsweise verfügt die Pneumatikeinheit über eine Steuerung, mit welcher sich die Pumpe und das mindestens eine Ventil ansteuern lassen.

Umfasst der Fahrzeugsitz mehrere pneumatische Kissen, so sind diese vorzugsweise über einen Ventilblock, bei welchem pro pneumatisches Kissen mindestens ein Ventil vorhanden ist, mit der Pumpe verbunden. Alternativ können auch mehrere pneumatische Kissen über dasselbe Ventil mit der Pumpe verbunden sein. Die Pneumatikeinheit kann insbesondere auch zum Anpassen des Füllvolumens von pneumatischen Kissen in der Polsterung des Fahrzeugsitzes eingesetzt werden. So lässt sich mit nur einer Pneumatikeinheit eine Vielzahl an Komfortfunktionen steuern.

Vorzugsweise ist jedem Fahrzeugsitz eine Pneumatikeinheit zugeordnet. Alternativ kann jedoch auch vorgesehen sein, dass zwei oder mehr Fahrzeugsitze, welche beispielsweise als Sitzreihe nebeneinander angeordnet sind, eine gemeinsame Pneumatikeinheit aufweisen. Ferner können pro Fahrzeugsitz auch mehrere Pneumatikeinheiten vorhanden sein, beispielsweise pro vorhandenem pneumatischen Kissen eine Pneumatikeinheit.

Vorzugsweise verfügt der Fahrzeugsitz über einen Sensor, mit welchem sich ein Übergang des mindestens einen Lehnenelements zwischen der Sitzposition und der Liegeposition oder umgekehrt detektieren lässt, um das mindestens eine pneumatische Kissen entsprechend aufzublasen respektive zu entleeren. Der Sensor ist vorzugsweise mit der Pneumatikeinheit elektrisch verbunden um entsprechende Sensordaten an diese zu übermitteln. Vorzugsweise wird das Aufblasen beziehungsweise Entleeren des mindestens einen pneumatischen Kissens durch eine elektronische Eingabeeinheit, welche durch einen Benutzer des Fahrzeugsitzes bedient werden kann, in Abhängigkeit der durch den Benutzer eingestellten Winkelposition des wenigstens einen Lehnenelements gesteuert.

Das mindestens eine pneumatische Kissen ist vorzugsweise an einer Kante der Sitzfläche und/oder des wenigstens einen Lehnenelements angeordnet. Insbesondere bevorzugt ist das mindestens eine pneumatische Kissen mit einer Polsterung der Sitzfläche und/oder des Lehnenelements verklebt oder verschweisst. Dadurch lässt sich eine besonders feste Verbindung zwischen dem mindestens einen pneumatischen Kissen und der Sitzfläche beziehungsweise dem Lehnenelement erzielen. Alternativ kann das mindestens eine pneumatische Kissen jedoch auch durch andere Verbindungstechniken, wie beispielseiwese durch eine Naht, einen Reiss- oder einen Klettverschluss mit der Sitzfläche und/oder mit dem wenigstens einen Lehnenelement verbunden sein. In einer weiteren bevorzugten Ausführungsform kann das mindestens eine pneumatische Kissen auch lose innerhalb eines Bezugs, welcher die Sitzfläche sowie das mindestens eine Lehnenelement umgibt, angeordnet sein, beispielsweise innerhalb einer flammfesten Textilummantelung.

Vorzugsweise verfügt der Fahrzeugsitz über mindestens einen Textilbezug, welcher über die Sitzfläche und das wenigstens eine Lehnenelement sowie das mindestens eine pneumatische Kissen gespannt ist. Dadurch wird eine optisch einheitliche Fläche erzielt. Ferner schützt der mindestens eine Textilbezug die Polsterung sowie das mindestens eine pneumatische Kissen vor Verschmutzungen und/oder Beschädigungen. Ferner ist vorzugsweise eine flammenhemmende Schicht, insbesondere eine flammfeste Textilummantelung um die Sitzfläche, das wenigstens eine Lehnenelement sowie das mindestens eine pneumatischen Kissen angebracht, um die Sicherheit zu erhöhen, was insbesondere bei Massenverkehrsmitteln wichtig und auch vorgeschrieben ist.

Der erfindungsgemässe Fahrzeugsitz wird vorzugsweise in Massenverkehrsmitteln wie Züge, Busse, Schiffe oder Flugzeuge eingesetzt. Alternativ kann der erfindungsgemässe Fahrzeugsitz jedoch auch in privaten Verkehrsmitteln wie PKW oder LKW eingesetzt werden.

Vorzugsweise verfügt der Fahrzeugsitz über einen Aktuator, mit welchem sich der Winkel des mindestens einen Lehnenelements relativ zur Sitzfläche motorisch verstellen lässt, wobei die Pneumatikeinheit anhand des Status dieses Aktuators das mindestens eine pneumatische Kissen aufbläst respektive entleert.

Die Verwendung eines Aktuators erhöht den Komfort, da eine Verstellung des mindestens einen Lehnenelements in die Liegeposition und zurück in die Sitzposition per Knopfdruck erfolgen kann. In einer weiter bevorzugten Ausführungsform kann der Aktuator auch die Sitzfläche linear entlang der Sitzrichtung verschieben, so dass je nach Platzverhältnissen eine optimale Konfiguration des Fahrzeugsitzes erzielt werden kann. Falls der Fahrzeugsitz noch über weitere Elemente verfügt, können diese ebenfalls über den Aktuator oder über zusätzliche Aktuatoren bewegt werden.

Geeignete Aktuatoren für Fahrzeugsitze sind einem Fachmann auf dem Gebiet bekannt. Beispielsweise können als Aktuatoren durch einen Motor angetriebene Spindeln verwendet werden.

Die Pneumatikeinheit ist vorzugsweise mit einer Steuerung des Aktuators verbunden, so dass diese ein Signal, welches den Übergang zur Liegeposition signalisiert, von der Steuerung erhält. Alternativ verfügt die Pneumatikeinheit über einen Sensor, welcher die relative Position eines bewegbaren Teils des Aktuators, beispielsweise eine Spindel, misst. Beim durch den Sensor detektierten Durchgang durch eine bestimmte Position dieses bewegbaren Teils werden das Aufblasen respektive das Entleeren des mindestens einen pneumatischen Kissens ausgelöst. In einer weiteren alternativen Ausführungsform kann auch ein Sensor am Fahrzeugsitz angeordnet sein, welcher die relative Position des wenigstens einen Lehnenelements misst und entsprechend Signale an die Pneumatikeinheit sendet.

Vorzugsweise verfügt die Pneumatikeinheit über eine Pumpe, mit welcher sich das mindestens eine pneumatische Kissen sowohl aufblasen wie auch entleeren lässt.

Dadurch ist eine aktive Entleerung des mindestens einen pneumatischen Kissens durch die Pumpe möglich, was den Entleerungsvorgang erheblich beschleunigt. Hierzu wird insbesondere bevorzugt eine Pumpe mit zwei Förderrichtungen eingesetzt.

Als "Pumpe mit zwei Förderrichtungen" im Sinne der vorliegenden Anmeldung wird eine Pumpe verstanden, welche im Stande ist, das pneumatische Kissen sowohl aufzupumpen wie auch aktiv zu entleeren.

Alternativ kann auch eine Pumpe mit nur einer Förderrichtung eingesetzt werden, wobei in diesem Fall ein aktives Entleeren des mindestens einen pneumatischen Kissens durch eine entsprechende Anordnung von Leitungen und Ventilen erzielt werden kann.

Vorzugsweise wird als Pumpe eine Membranpumpe eingesetzt. Die Membranpumpe umfasst bevorzugt einen elektrischen Antrieb.

Alternativ kann es sich bei der Pumpe auch um eine Strömungspumpe handeln, welche ein kontinuierliches Fördern des Fluids ermöglicht. Die Pumpe kann beispielsweise als Rotationskolbenpumpe, Drehschieberpumpe oder Impellerpumpe ausgestaltet sein.

Vorzugsweise verfügt das mindestens eine pneumatische Kissen über einen Drucksensor, der den im Innern des mindestens einen pneumatischen Kissens vorherrschenden Druck misst, wobei die Pneumatikeinheit derart ausgestaltet ist, dass diese bei Überschreiten oder Unterschreiten eines vorgegebenen Solldrucks das mindestens eine pneumatische Kissen entleert beziehungsweise aufbläst, bis der Solldruck erreicht wird.

Dies erhöht die Sicherheit sowie den Komfort eines auf dem Fahrzeugsitz sitzenden Passagiers, da die in dem mindestens einen pneumatischen Kissen vorhandene Luftmenge nachgeregelt wird, zum Beispiel falls das mindestens eine pneumatische Kissen beim Aufblasen unerwartet auf ein im Weg stehendes Objekt trifft. Durch ein solches Objekt kann sich das mindestens eine pneumatische Kissen nicht auf sein vollständiges Volumen entfalten, wodurch bei einem gleichbleibenden Luftvolumen der Innendruck ansteigt. Dies kann dazu führen, dass sich das mindestens eine pneumatische Kissen für einen Passagier im Vergleich zum Rest des Sitzes als zu hart anfühlt. Ferner kann ein zu grosser Überdruck auch zu einer Beschädigung oder gar zu einem Platzen des mindestens einen pneumatischen Kissens führen. Mit einer aktiven Nachregelung des Innendruckes auf einen vorgegebenen Solldruck werden diese Nachteile verhindert.

Ferner lassen sich mit dieser Ausführungsform bei Flugzeugsitzen auch Druckunterschiede, welche vom sich in Abhängigkeit der Flugphase verändernden Kabinendruck stammen, ausgleichen, wodurch sich das mindestens eine pneumatische Kissen für einen Passagier immer gleich hart anfühlt.

Der Drucksensor ist vorzugsweise innerhalb des pneumatischen Kissens angeordnet. Alternativ kann der Drucksensor jedoch auch in einer Leitung oder einem Ventilblock zwischen der Pumpe und dem pneumatischen Kissen angeordnet sein. Es muss lediglich sichergestellt werden, dass der Drucksensor den innerhalb des pneumatischen Kissens vorherrschenden Druck messen kann.

Die vorliegende Anmeldung bezieht sich ferner auf die Verwendung eines erfindungsgemässen Fahrzeugsitzes in einem Flugzeug. Bei der Verwendung in einem Flugzeug verfügt der erfindungsgemässe Fahrzeugsitz vorzugsweise über eine Polsterung, welche mindestens ein pneumatisches Kissen verfügt, um das Gesamtgewicht des Fahrzeugsitzes zu senken.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Darstellung eines Fahrzeugsitzes aus dem Stand der Technik mit der Rückenlehne in einer Sitzposition;
- Fig. 2: den Fahrzeugsitz aus der Fig. 1 in der Liegeposition;
- Fig. 3: eine erste Ausführungsform des erfindungsgemässen Fahrzeugsitzes in der Liegeposition;
- Fig. 4: eine detaillierte Darstellung eines pneumatischen Kissens;
- Fig. 5: eine zweite Ausführungsform des erfindungsgemässen Fahrzeugsitzes in einer Sitzposition;
- Fig. 6: der Fahrzeugsitz gemäss Fig. 5 in der Liegeposition.

Grundsätzlich sind in den Figuren gleiche Teile mit gleichen Bezugszeichen versehen.

### Wege zur Ausführung der Erfindung

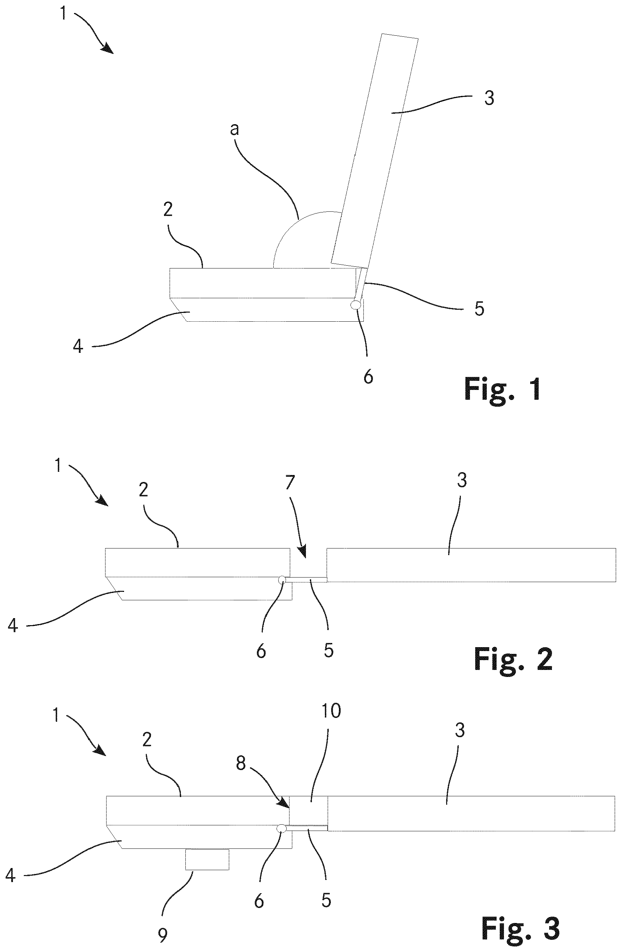

Die Fig. 1 zeigt schematisch einen Fahrzeugsitz 1 gemäss dem Stand der Technik. Der Fahrzeugsitz 1 verfügt über eine Sitzfläche 2 mit einer Polsterung sowie über eine Rückenlehne 3 mit einer Polsterung. Die Rückenlehne 3 stellt dabei ein relativ zur Sitzfläche 2 verstellbares Lehnenelement dar. Der Fahrzeugsitz 1 verfügt über einen Unterbau 4, der hier nur angedeutet dargestellt ist. Die Rückenlehne 3 befindet sich in der Fig. 1 in der Sitzposition, wobei die Rückenlehne 3 in einem stumpfen Winkel a zur Sitzfläche 2 steht. Weiter ist die Rückenlehne 3 über eine Strebe 5 mit einer Schwenkachse 6 verbunden, welche ein Verschwenken der Rückenlehne 3 relativ zur Sitzfläche 2 ermöglicht. Dadurch kann die Rückenlehne 3 unterschiedliche Winkel a relativ zur Sitzfläche 2 einnehmen. Auf die Schwenkachse 6 wirkt ein Verstellmechanismus (nicht gezeigt), welcher eine Arretierung der Rückenlehne in unterschiedlichen Winkeln a relativ zur Sitzfläche 2 ermöglicht. Der Verstellmechanismus kann über einen Aktuator verfügen, mit welchem sich die Rückenlehne 3 motorisch relativ zur Sitzfläche 2 verschwenken lässt.

Die Fig. 2 zeigt den Fahrzeugsitz 1 gemäss der Fig. 1 mit der Rückenlehne 3 in einer Liegeposition, wobei die Rückenlehne 3 und die Sitzfläche 2 eine im Wesentlichen plane Liegefläche für einen auf dem Fahrzeugsitz sitzenden Passagier (nicht gezeigt) bilden. Durch die Anordnung der Schwenkachse 6 am Unterbau 4 entsteht beim Verschwenken der Rückenlehne 3 eine Lücke 7 zwischen der Sitzfläche 2 und der Rückenlehne 3. Diese Lücke 7 fühlt sich für einen auf dem Fahrzeugsitz liegenden Passagier (nicht gezeigt) unangenehm an.

Die Fig. 3 zeigt eine erste Ausführungsform eines erfindungsgemässen Fahrzeugsitzes 1. Um die Lücke 7 gemäss Fig. 2 zu schliessen, verfügt der erfindungsgemässe Fahrzeugsitz 1 über ein pneumatisches Kissen 10, welches in einem hinteren Randbereich 8 der Sitzfläche, welcher an die Rückenlehne 3 - dem Lehnenelement des Fahrzeugsitzes 1 - grenzt, an der Kante befestigt ist. Beim Übergang der Rückenlehne 3 in die Liegeposition wird das pneumatische Kissen 10 durch eine Pneumatikeinheit 9 aufgeblasen. Das pneumatische Kissen 10 ist dabei derart ausgestaltet, dass dieses im aufgeblasenen Zustand mit der Sitzfläche 2 und der Rückenlehne 3 eine plane Fläche bildet. Über die Pneumatikeinheit 9 können noch weitere pneumatische Kissen (nicht gezeigt), welche am Sitz oder in der Polsterung der Sitzfläche 2 und/oder der Rückenlehne 3 angeordnet sind, aufgeblasen beziehungsweise entleert werden.

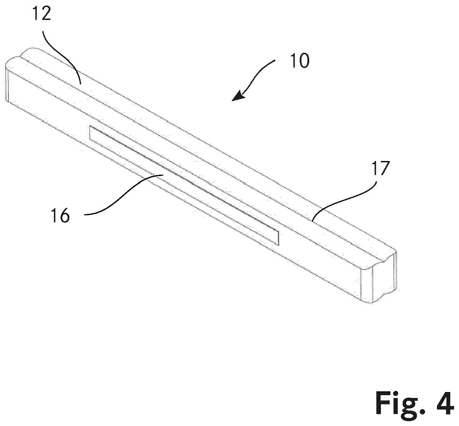

Die Fig. 4 zeigt eine detailliertere Darstellung einer Ausführungsform eines pneumatischen Kissens 10, welches in einem erfindungsgemässen Fahrzeugsitz 1 verwendet werden kann. Das pneumatische Kissen verfügt über eine geschlossene Hülle 12. An einer Aussenfläche der Hülle 12 ist ein Haltemittel 16 angeordnet, mit welchem sich das pneumatische Kissen 10 an einer Kante einer Sitzfläche 2 oder eines Lehnenelements befestigen lässt. In der gezeigten Ausführungsform ist das Haltemittel 16 als Klettband ausgestaltet. Die Hülle 12 des pneumatischen Kissens weist ferner eine Sollfaltstelle 17 auf, welche das Zusammenfalten der Hülle 12 des pneumatischen Kissens 10 während des Entleerungsvorgangs erleichtert.

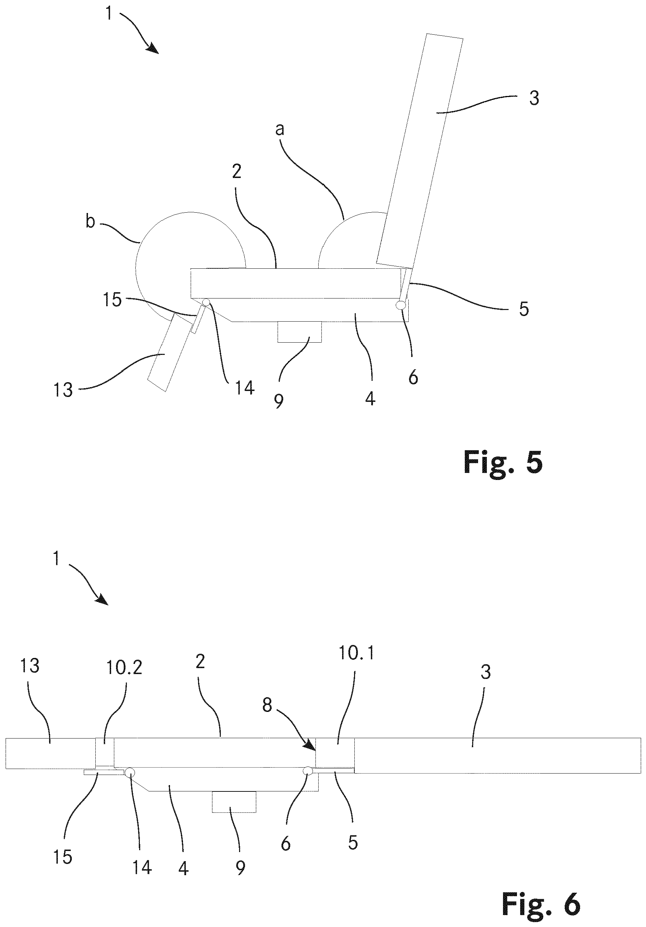

Die Fig. 5 zeigt eine zweite Ausführungsform eines erfindungsgemässen Fahrzeugsitzes 1. Im Unterschied zur Ausführungsform gemäss der Fig. 3 verfügt der Fahrzeugsitz dieser Ausführungsform nebst der Rückenlehne 3 über ein zweites Lehnenelement in der Form einer Beinstütze 13. Die Beinstütze 13 ist über eine zweite Strebe 15 mit einer zweiten Schwenkachse 14 verbunden. Die Beinstütze 13 lässt sich in analoger Weise wie die Rückenlehne 3 im Winkel relativ zur Sitzfläche 2 verstellen. Die Beinstütze 13 steht dabei in einem überstumpfen Winkel b zur Sitzfläche 2.

Wie die Fig. 6 zeigt, verfügt die zweite Ausführungsform des erfindungsgemässen Fahrzeugsitzes 1 wiederum über ein erstes pneumatisches Kissen 10.1, welches an einer Kante der Sitzfläche 2 angeordnet ist, welche zur Rückenlehne 3 hin gerichtet ist. Durch Aufblasen dieses ersten pneumatischen Kissens 10.1 lässt sich eine Lücke zwischen Sitzfläche 2 und Rückenlehne schliessen. Gleichermassen ist an einer weiteren Kante der Sitzfläche 2, welche zur Beinstütze 13 hin gerichtet ist, ein zweites pneumatisches Kissen 10.2 angeordnet, welches beim Übergang in eine Liegeposition aufgeblasen wird, um eine Lücke zwischen der Beinstütze 13 und der Sitzfläche 2 zu füllen. Mittels der zwei pneumatischen Kissen 10.1, 10.2 lässt sich so mit der Beinstütze 13, der Sitzfläche 2 sowie der Rückenlehne 3 eine durchgehende, ebene Liegefläche bilden.

## Patentansprüche

1. Fahrzeugsitz umfassend eine Sitzfläche (2) sowie wenigstens ein zur Sitzfläche (2) um eine Achse (6) schwenkbares Lehnenelement (3, 13), wobei das wenigstens eine Lehnenelement (3, 13) von einer Sitzposition, in welcher das Lehnenelement (3, 13) im Wesentlichen in einem stumpfen oder überstumpfen Winkel (a, b) relativ zur Sitzfläche (2) steht, in eine Liegeposition, in welcher die Sitzfläche (2) sowie das wenigstens eine Lehnenelement (3, 13) eine im Wesentlichen plane Fläche bilden, und zurück bewegbar ist, und wobei der Fahrzeugsitz (1) über mindestens ein pneumatisches Kissen (10; 10.1, 10.2) sowie über eine Pneumatikeinheit (9) verfügt, welche derart ausgestaltet ist, dass diese das mindestens eine pneumatische Kissen (10; 10.1, 10.2) im Wesentlichen vollständig aufbläst, wenn das wenigstens eine Lehnenelement (3, 13) in die Liegeposition bewegt wird, und das mindestens eine pneumatische Kissen (10; 10.1, 10.2) im Wesentlichen vollständig entleert, wenn das wenigstens eine Lehnenelement (3, 13) in die Sitzposition bewegt wird, **dadurch gekennzeichnet, dass** das mindestens eine pneumatische Kissen (10; 10.1, 10.2) in einem Randbereich (8) der Sitzfläche (2) oder des wenigstens einen Lehnenelements (3, 13) angeordnet ist, welcher an das wenigstens eine Lehnenelement (3, 13) beziehungsweise die Sitzfläche (2) grenzt, so dass sich das mindestens eine pneumatische Kissen (10; 10.1, 10.2) in der Liegeposition zwischen der Sitzfläche (2) und dem wenigstens einen Lehnenelement (3, 13) erstreckt.

2. Fahrzeugsitz gemäss Anspruch 1, **dadurch gekennzeichnet, dass** das wenigstens eine Lehnenelement eine Rückenlehne (3), eine Beinstütze (13) oder beides ist.

3. Fahrzeugsitz gemäss einem der Ansprüche 1 oder 2, **dadurch gekennzeichnet, dass** der Fahrzeugsitz (1) über einen Aktuator verfügt, mit welchem sich der Winkel (a) des wenigstens einen Lehnenelements (3, 13) relativ zur Sitzfläche (2) motorisch verstellen lässt, wobei die Pneumatikeinheit (9) derart ausgestaltet ist, dass diese anhand des Status des Aktuators das mindestens eine pneumatische Kissen (10; 10.1, 10.2) aufbläst respektive entleert.

4. Fahrzeugsitz gemäss einem der Ansprüche 1 bis 3, **dadurch gekennzeichnet, dass** die Pneumatikeinheit (9) über eine Pumpe verfügt, mit welcher sich das mindestens eine pneumatische Kissen (10; 10.1, 10.2) sowohl aufblasen wie auch entleeren lässt.

5. Fahrzeugsitz gemäss einem der Ansprüche 1 bis 4, **dadurch gekennzeichnet, dass** das mindestens eine pneumatische Kissen (10; 10.1, 10.2) über einen Drucksensor verfügt, der den im Innern des mindestens einen pneumatischen Kissens (10; 10.1, 10.2) vorherrschenden Druck misst und die Pneumatikeinheit (9) derart ausgestaltet ist, dass diese bei Überschreiten oder Unterschreiten eines vorgegebenen Solldrucks das mindestens eine pneumatische Kissen (10; 10.1, 10.2) entleert beziehungsweise aufbläst, bis der Solldruck erreicht wird.

6. Verwendung eines Fahrzeugsitzes gemäss einem der Ansprüche 1 bis 5 in einem Flugzeug.

## Claims

1. Vehicle seat comprising a seat face (2) and at least one rest element (3, 13) which can be pivoted relative to the seat face (2) about an axle (6), wherein the at least one rest element (3, 13) can be moved from a seating position, in which the rest element (3, 13) is located substantially at an obtuse or reflex angle (a, b) relative to the seat face (2), into a reclined position, in which the seat face (2) and the at least one rest element (3, 13) form a substantially planar face, and back again, and wherein the vehicle seat (1) has at least one pneumatic cushion (10; 10.1, 10.2) and a pneumatic unit (9) which is constructed in such a manner that it substantially completely inflates the at least one pneumatic cushion (10; 10.1, 10.2) when the at least one rest element (3, 13) is moved into the reclined position, and substantially completely deflates the at least one pneumatic cushion (10; 10.1, 10.2) when the at least one rest element (3, 13) is moved into the seating position, **characterized in that** the at least one pneumatic cushion (10; 10.1, 10.2) is arranged in an edge region (8) of the seat face (2) or of the at least one rest element (3, 13), said edge region (8) being adjacent to the at least one rest element (3, 13) or the seat face (2) so that the at least one pneumatic cushion (10; 10.1, 10.2) extends between the seat face (2) and the at least one rest element (3, 13) in the reclined position.

2. Vehicle seat according to Claim 1, **characterized in that** the at least one rest element is a backrest (3), a leg support (13), or both.

3. Vehicle seat according to either Claim 1 or 2, **characterized in that** the vehicle seat (1) has an actuator, by means of which the angle (a) of the at least one rest element (3, 13) can be adjusted in a motorized manner relative to the seat face (2), wherein the pneumatic unit (9) is constructed in such a manner that on the basis of the status of the actuator it inflates or deflates the at least one pneumatic cushion (10; 10.1, 10.2).

4. Vehicle seat according to one of Claims 1 to 3, **characterized in that** the pneumatic unit (9) has a pump, by means of which the at least one pneumatic cushion (10; 10.1, 10.2) can be both inflated and deflated.

5. Vehicle seat according to one of Claims 1 to 4, **characterized in that** the at least one pneumatic cushion (10; 10.1, 10.2) has a pressure sensor which measures the prevailing pressure inside the at least one pneumatic cushion (10; 10.1, 10.2) and the pneumatic unit (9) is constructed in such a manner that, when the pressure exceeds or falls below a predetermined set pressure, the at least one pneumatic cushion (10; 10.1, 10.2) is deflated or inflated until the set pressure is reached.

6. Use of a vehicle seat according to one of Claims 1 to 5 in an aircraft.

## Revendications

1. Siège de véhicule comprenant une surface d'assise (2) ainsi qu'au moins un élément d'appui (3, 13) pivotant autour d'un axe (6) par rapport à la surface d'assise (2), l'au moins un élément d'appui (3, 13) pouvant être déplacé depuis une position d'assise, dans laquelle l'élément d'appui (3, 13) se trouve sensiblement à un angle (a, b) obtus ou concave par rapport à la surface d'assise (2), en une position d'allongement, dans laquelle la surface d'assise (2) ainsi que l'au moins un élément d'appui (3, 13) forment une surface sensiblement plane, et inversement, et le siège de véhicule (1) disposant d'au moins un coussin pneumatique (10 ; 10.1, 10.2) ainsi que d'une unité pneumatique (9), laquelle est configurée de telle sorte que celle-ci gonfle sensiblement entièrement l'au moins un coussin pneumatique (10 ; 10.1, 10.2) lorsque l'au moins un élément d'appui (3, 13) est déplacé dans la position d'allongement, et vide sensiblement entièrement l'au moins un coussin pneumatique (10 ; 10.1, 10.2) lorsque l'au moins un élément d'appui (3, 13) est déplacé dans la position d'assise, **caractérisé en ce que** l'au moins un coussin pneumatique (10 ; 10.1, 10.2) est disposé dans une zone de bord (8) de la surface d'assise (2) ou de l'au moins un élément d'appui (3, 13), laquelle délimite l'au moins un élément d'appui (3, 13) ou la surface d'assis (2), de sorte que l'au moins un coussin pneumatique (10 ; 10.1, 10.2), dans la position d'allongement, s'étend entre la surface d'assise (2) et l'au moins un élément d'appui (3, 13).

2. Siège de véhicule selon la revendication 1, **caractérisé en ce que** l'au moins un élément d'appui est un dossier (3), un repose-pieds (13) ou les deux.

3. Siège de véhicule selon l'une des revendications 1 ou 2, **caractérisé en ce que** le siège de véhicule (1) dispose d'un actionneur avec lequel l'angle (a) de l'au moins un élément d'appui (3, 13) par rapport à la surface d'assise (2) peut être réglé de manière motorisée, l'unité pneumatique (9) étant configurée de telle sorte que celle-ci gonfle ou vide l'au moins un coussin pneumatique (10 ; 10.1, 10.2) à l'aide de l'état de l'actionneur pneumatique.

4. Siège de véhicule selon l'une des revendications 1 à 3, **caractérisé en ce que** l'unité pneumatique (9) dispose d'une pompe avec laquelle l'au moins un coussin pneumatique (10 ; 10.1, 10.2) se laisse à la fois gonfler et aussi vider.

5. Siège de véhicule selon l'une des revendications 1 à 4, **caractérisé en ce que** l'au moins un coussin pneumatique (10 ; 10.1, 10.2) dispose d'un capteur de pression qui mesure la pression prédominante à l'intérieur de l'au moins un coussin pneumatique (10 ; 10.1, 10.2) et qui est configuré de telle sorte qu'en cas de franchissement vers le haut ou vers le bas d'une pression de consigne prédéfinie, vide ou gonfle l'au moins un coussin pneumatique (10 ; 10.1, 10.2) jusqu'à ce que la pression de consigne soit atteinte.

6. Utilisation d'un siège de véhicule selon l'une des revendications 1 à 5 dans un aéronef.
